# EUROPÄISCHE PATENTSCHRIFT

(11) **EP 2 426 948 B1**
(45) Veröffentlichungstag und Bekanntmachung des Hinweises auf die Patenterteilung: **28.03.2018**
(21) Anmeldenummer: 11007009.1
(22) Anmeldetag: 27.08.2011
(51) Int. Cl.: H04Q 11/00, H04B 10/25

(54) **Verfahren und Vorrichtung zur automatischen Port Status und Konfigurationsteuerung für Optische Zugangsnetzwerke**
Method and device for automatic port status and configuration control for optical access networks
Procédé et dispositif de statut automatique de ports et commande de configuration pour réseaux d'accès optiques

(30) Priorität: 13.09.2010 DE 102010037501; 03.09.2010 DE 102010044324
(43) Veröffentlichungstag der Anmeldung: 07.03.2012
(73) Patentinhaber: Deutsche Telekom AG, 53113 Bonn (DE)
(72) Erfinder: Haag, Thomas, 63110 Rodgau (DE); Szuppa, Sabine, 15754 Heidesee (DE); Witschurke, Birgit, 16515 Oranienburg (DE)
(74) Vertreter: 2K Patentanwälte Blasberg Kewitz & Reichel

(56) Entgegenhaltungen:
- EP-A1- 1 677 470
- US-A1- 2007 127 487
- US-A1- 2009 208 204

## Beschreibung

Die Erfindung betrifft ein Verfahren und eine Vorrichtung zur automatischen Erlangung eines Port Status und/oder zur Konfigurationsteuerung in einem optischen Zugangsnetzwerk einer Abschlusseinrichtung (ONT).

### 1. Gebiet der Erfindung:

Die Erfindung betrifft das breitbandige optische Zugangsnetz. Hiervon werden als Netzelemente der optische Zugangsmultiplexer fortan als OLT und ONU/ONT (Access Node) und der Dienstezugang das Service Gateway SGW genannt betrachtet.

Als Kandidat für ein Protokoll zwischen beiden Netzelementen wird das in der Standardisierung befindliche Protokoll ANCP (Access Node Control Protocol) verwendet.

Bekannt in breitbandigen optischen Zugangsnetzen ist die Signalisierung über Netzmanagementschnittstellen der einzelnen Netzelemente, die üblicherweise durch SNMP erfolgt.

Zwischen OLT und ONU/ONT erfolgt der Informationsaustausch über Konfiguration und Gerätezustand über den OMCI Steuerkanal. IETF und BBF befassen sich mit dem Reporting von DSL basierten Schnittstellen, die sich sowohl in einem beliebigen Access Node (Zugangsknoten) oder der ONU befinden können und mit einem Service Gateway verbunden sind. Der in Erarbeitung befindliche Standard WT-207 in BBF befasst sich mit ONUs im FTTB/C (Fibre To The Building / Fiber To The Curb Glasfaser bis zum Kabelverzweiger)Szenario die DSL Schnittstellen terminieren. Entsprechende Arbeiten in IETF wie "draft-bitar-wadhwa-ancp-pon" befassen sich mit FTTH (Fibre To The Home) Szenario allerdings nur für den Use Case Multicast.

Folgende Ansätze werden zurzeit verwendet oder sind in der Bearbeitung.
1. IETF: SNMP
2. ITU-T: OMCI
3. IETF: ANCP Access Node Control Protocol
4. BBF: Layer 2 Control, WT-207
5. IETF: draft-bitar-wadhwa-ancp-pon

Keiner der hier aufgeführten Arbeiten befasst sich mit der Verwendung der Layer 2 Control Funktion für FTTH.

Ansatz 1 erfolgt nicht in Echtzeit und meldet nur Alarme nicht aber Port- und Schnittstelleneigenschaften.

Ansatz 2 dient ausschließlich der Verbindung innerhalb eines OLT/ONU/ONT Systems bzw. Domaine, die nicht bis zum Service Gateway reicht.

Ansatz 3 erwähnt derzeit nur die Option für ein optisches Zugangsnetz ohne jedoch eine Ausgestaltung und Funktionsweise zu beschreiben.

Ansatz 4 beschreibt die Verwendung einer Steuerverbindung zwischen OLT/ONU und SGW. Allerdings wird auch hier nicht beschrieben welche Parameter und welcher Messageflow/ Nachrichtenfluss betrieblich geeignet sind.

Ansatz 5 beschreibt nur den Use Case/Anwendungsfall Multicast für das FTTH Szenario.

ANCP als Protokoll wird im breitbandigen Zugangsnetz eingesetzt. Jedoch sieht die Standardisierung derzeit ausschließlich die Verwendung für breitbandige DSL Anschlüsse vor.

Die Druckschriften US 2009/208204A1 und US 2007/127487A1 offenbaren die Steuerung von Service Classes durch ONU und ONT.
Die Druckschrift EP1677470A1 offenbart die Bandbreitensteuerung in einem Netzwerk.

### 2. Überblick über die Erfindung.

An den oben genannten Nachteilen setzt die Erfindung an. Die Erfindung hat die Aufgabe, den Informationsfluss hinsichtlich des Status des ONT und dessen Steuerung zu verbessern.

Gelöst wird die Aufgabe mit einer Vorrichtung mit den Merkmalen der unabhängigen Ansprüche.

Im Einzelnen handelt es sich um ein Verfahren zur automatischen Erlangung eines Port Status und/oder zur Konfigurationsteuerung in einem optischen Zugangsnetzwerk eine Abschlusseinrichtung (ONT), umfassend eine optische Abschlusseinrichtung (ONT) beim Endkunden, die mit einer OLT (optische Line Terminierung) verbunden ist. Die OLT ist wiederum mit einem Service Gateway verbunden.
Das Verfahren umfassend die Schritte:
- Übermitteln einer ONT-ID und Zugangsdaten (C-Vlan ID, S-VLAN ID, LINE ID) vom ONT zum OLT als ONT-Informationen. Hierbei werden die Zugangsdaten, die dem Endkunden durch den Provider bereitgestellt werden, beim ONT eingetragen, oder sind in diesem Vorkonfiguriert. Sie dienen dazu festzulegen, welche Bandbreite dem Kunden zur Verfügung gestellt wird. Die ONT-ID, dient zur eindeutigen Kennzeichnung des ONT. In der Regel erfolgt eine Verknüpfung zwischen ONT und Zugangsdaten ebenfalls beim Service-Gateway, der in einer Datenbank für die Service-Dienstleistungen für den entsprechenden Anschluss Kenntnis hat.
Die so erlangten ONT-Informationen, werden vom OLT zum Service Gateway, weitergeleitet. Im Einzelfall können die Informationen noch angereichert werden, die Informationen, die der OLT bzgl. des ONT gesammelt hat, wie z.B. den Portstatus. Im Einzelfall, z.B. wenn der ONT nicht erreichbar ist, kann der OLT eigenständig die Informationen über den ONT erstellen und weiterleiten. Somit entsteht ein vollständiges Informationsbild vom ONT.
Das Service Gateway vergleicht dann anhand einer Kundendatenbank die erlangten ONT-Informationen und erzeugt dann eine Antwort an den OLT zur Steuerung der Einstellung zwischen ONT und OLT. Diese Einstellung betreffen insbesondere die Servicebandbreite (TC).

Nachdem so das ONT beim Service Gateway bekannt gemacht wurde, kann zwischen OLT und Service Gateway über ANCP kommuniziert werden, um den Status der Verbindung zwischen OLT und ONT mitzuteilen, wobei vorzugsweise die ONT-ID zur Identifikation verwendet wird, um eine oder mehrere der folgenden Informationen zu übermitteln:
Port Typ, Senden von Bandbreiteninformationen, Port Up, Port Down. Da an einem Port bei einem OLT mehrere ONT angeschlossen sein können, bedarf es der ONT-ID, um den ONT eindeutig zu kennzeichnen, um diese Informationen mitzuteilen.

Zur Kommunikation werden im ANCP TLV Bereiche verwendet, die noch nicht belegt sind, um den Status mitzuteilen.

Wenn das ONT oder ein an das ONT angeschlossene CPE auf Layer 2 eine Session/Sitzung aufbauen will, bedarf es einer IP-Adresse, die über das DHCP oder PPPoE Protokoll erlangt wird. Hierbei werden die Informationen durch die ONT oder auch die OLT angereichert, um dann zum Service Gateway zu gelangen. Bevorzugt werden ONT-ID, OLT-ID, Slot, Port in einer bestimmbaren Option des DHCP Relay Agents oder PPPoE Intermediate Agents abgelegt. Auf diese Weise kann eine Zuordnung der ONT-ID zur IP-Adresse erfolgen beim Service Gateway. Der Service Gateway kann somit auch den Datenfluss zum ONT überwachen und steuern.

Anhand der DHCP oder PPPoE Daten kann somit auch ein Vergleich mit den Kundendaten erfolgen, um kundenspezifische Session-/Netzwerkeinstellungen vorzunehmen. So kann das Routing oder der IP-Adressen-Bereich gesteuert werden, durch Zuweisung bestimmter Adressen.

Ein weiterer Bestandteil ist ein System zur automatischen Erlangung eines Port Status und/oder zur Konfigurationsteuerung in einem optischen Zugangsnetzwerk einer optischen Abschlusseinrichtung (ONT) beim Endkunden. Diese umfasst eine ONT, die mit einer OLT (optische Line Terminierung) verbunden ist. Ferner umfasst es einen Service Gateway, der mit dem OLT verbunden ist. Der ONT ist so konfiguriert, dass er eine ONT-ID und Zugangsdaten (C-Vlan ID, S-VLAN ID, LINE ID) zum OLT als ONT-Informationen überträgt.

Der OLT wiederum ist so konfiguriert, dass ein Weiterleiten der ONT-Informationen vom OLT zum Service Gateway erfolgt. Der Service-Gateway wiederum ist so konfiguriert, dass anhand einer Kundendatenbank ein Vergleichen der erlangten ONT-Informationen erfolgt und ein Erzeugen einer Antwort an den OLT zur Steuerung der Einstellung zwischen ONT und OLT, insbesondere was die Servicebandbreite (TC) betrifft.

Die skizzierten Verwendungsfälle im FTTH Szenario sowie Message Flow und Protokollelemente sind bisher nicht bekannt. Im Folgenden werden zwei Verwendungsfälle, Nachrichtenflüsse und Protokollelemente bzw. Parameter beschrieben, die zur Umsetzung im breitbandigen optischen Zugangsnetz für das FTTH Szenario notwendig sind.

Wesentliche Merkmale der Erfindung sind die Übermittlung des Portstatus eines optischen Zugangssystems zu einem Service Gateway z.B. einen BRAS verbunden mit der serviceabhängigen Kundenportkonfiguration. Damit wird erreicht, dass das Service Gateway immer die aktuellen PON Port Informationen hat. Die automatische Konfiguration über ANCP ermöglicht einen kostenoptimierten Betrieb von PON Systemen. Mit marktgängigen PON Systemen ist es nicht möglich den PON Port Status in Echtzeit zu einem beliebigen Service Gateway zu übermitteln und von diesem kundenindividuelle Konfigurationen über das Service Gateway vorzunehmen. Die Erweiterung hinsichtlich dynamischer Session/Sitzungskorrelation ermöglicht eine flexible Auswahl des Service Gateways, was auch im Falle von Ersatzwegeschaltungen von Vorteil ist, da Topologieinformationen zu Beginn der Einrichtung eines Anschlusses im Service Gateway nicht mehr notwendig sind. So kann die Abfrage von Statusinformationen durch Ereignisse gesteuert werden, wie z.B. einem hoch oder runterfahren eines Ports, oder einem Ausbleiben eines Datenaustauschs, alternativ kann auch regelmäßig ein Austausch von Informationen stattfinden. Dieser Austausch von Informationen kann vom Service Gateway als auch vom OLT angestoßen werden.

### Figurenbeschreibung:

Im Folgenden werden die Figuren kurz beschrieben:
Fig. 1 zeigt eine "PON-Topology Discovery" oder auch Topologieerkennung;
Fig. 2 zeigt eine "PON Line Configuration" oder auch PON Verbindungskonfiguration.
Fig. 3 zeigt eine "PON-Topology Discovery" die Topologieerkennung gemäß der vorliegenden Erfindung.

### Detaillierte Beschreibung der Erfindung:

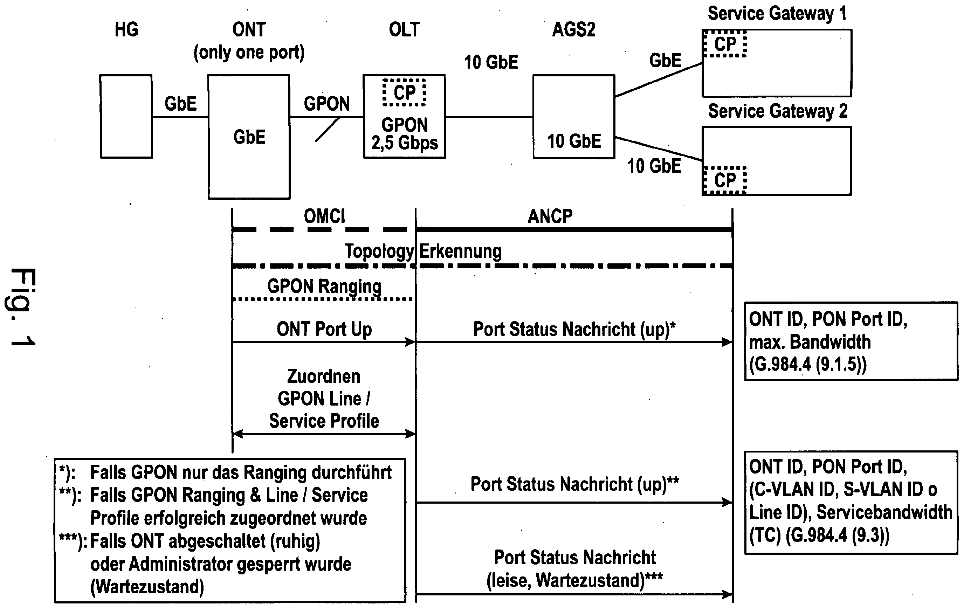

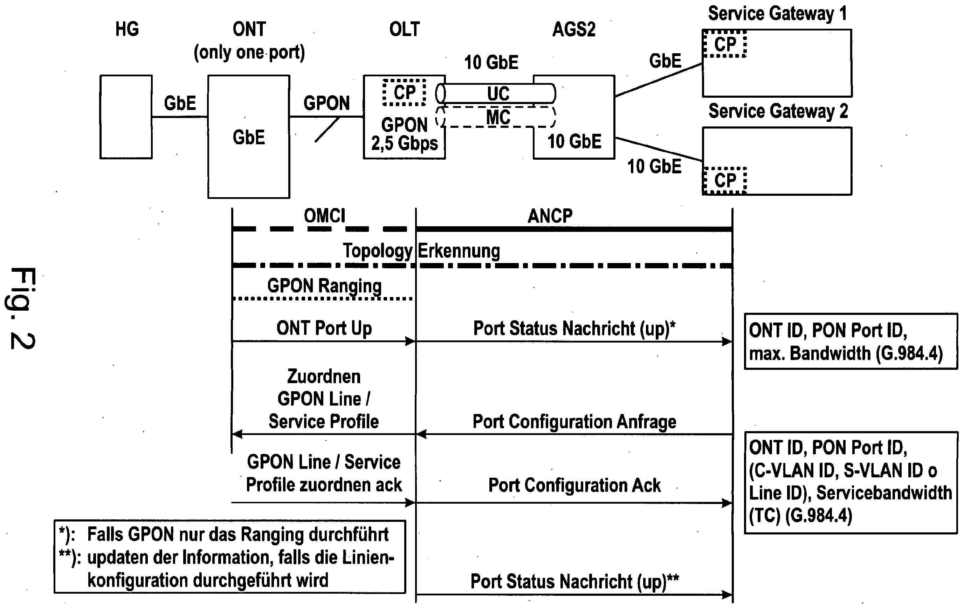

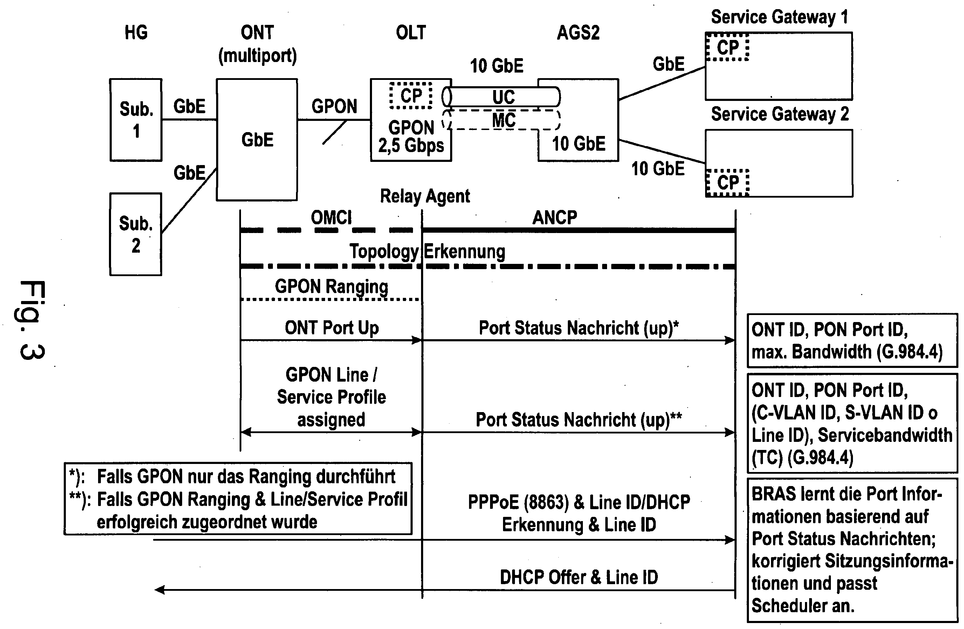

Gegenstand der Erfindung sind die folgenden Verwendungsfälle "PON-Topology Discovery" (Fig.1) und "PON Line Configuration" (Fig.2) sowie die Erweiterung des Use Cases/Anwendungsfalles "PON-Topology Discovery" hinsichtlich dynamischer Session/Sitzungs Identifizierung (Fig. 3).

### 3. Beschreibung und Wirkung der Erfindung:

### 3.1 Anwendungsfall "PON Topology Discovery" - Funktionsablauf

Die der Erfindung zu Grunde liegende Topologie ist in Fig. 1 gezeigt.

Als optische Abschlusseinrichtung ist ein ONT (Optical Network Termination) beim Kunden installiert. Sobald diese Abschlusseinrichtung mit dem PON System verbunden ist und ein optisches Signal erkennt beginnt ein sog. Ranging/Ortung. Nach erfolgreichem Ranging wird der OMCI Kanal zwischen ONT und OLT aufgebaut. Über den OMCT Steuerkanal erfolgt eine Übertragung des Portstatus in Richtung OLT und der Austausch notwendiger Konfigurationsparameter vom OLT zum ONT. Unmittelbar danach sendet der OLT eine ANCP PON Port Status Nachricht über IP an das Service Gateway. Diese PON Nachricht enthält den Status sowie ONT ID, PON Port ID, max. Bandwith/Bandbreite (ITU-T G.984.4). Auf Basis dieser Parameter erkennt das Service Gateway den entsprechenden OLT Port an dem das ONT angeschlossen ist sowie die zugehörige PON Bandbreite. Auf Basis dieser Parameter ist das Service Gateway in der Lage im Downstream den entsprechenden Bandbreitenwert am Scheduler in Downstream Senderichtung einzustellen. Dadurch wird gewährleistet, dass im Downstream nur der Datenstrom gesendet wird, der der im SLA vereinbarten Kanalkapazität entspricht. Diese Funktion des Service Gateway ist in Teilen heute schon vorhanden und nicht Bestandteil der Erfindung.

Besondere Aspekte sind somit
a. Einsatz des Protokolls zwischen OLT und Service Gateway
b. Verwendung eines eindeutigen Portadressierungsschemas zur Teilnehmeridentifizierung
c. Definieren eines Port Types (ONT)
d. Erkennung, ob die Anschlussleitung durch ein PON CPE abgeschlossen ist
e. Senden einer "PON Port up"/ "Port down" Nachricht an das Service Gateway

### 3.2 Anwendungsfall "PON Line Configuration" - Funktionsablauf

Aufbauend auf den Grundfunktionen des Anwendungsfall "PON Topolögy Discovery" verwendet das Service Gateway die über ANCP übermittelte Portinformation, gleicht diese mit Kundendaten ab und sendet entsprechend den SLA Bedingungen eine Konfigurationsnachricht über ANCP zum OLT. Diese Konfigurationsnachricht kann z.B. Informationen über ONT ID, PON Port ID, (C-Vlan ID, S-VLAN ID o Line ID), Servicebandwith (TC) (ITU-T G.984.4) enthalten. Der OLT wiederum wertet diese Information aus, setzt sie auf OMCI( Operating Maintenance Control Interface) um und konfiguriert damit die GPON (Gigabit Passive Optical Network) Verbindung zum ONT. Das ONT quittiert die vorgenommene Konfiguration und die Quittierung wird auf ANCP umgesetzt, d.h. das Quittungssignal wird zum Service Gateway übermittelt.

Zusätzlicher Aspekt für Anwendungsfall "PON Line Configuration" ist somit:
f. Service Gateway vergleicht anhand der Kundendatenbank die Daten und sendet eine "PON PORT Config" Nachricht, die eine Zuweisung vom z.B. ONT ID, PON Port ID, (C-Vlan ID, S-VLAN ID oder Line ID), Servicebandwith (TC) (ITU-T G.984.4) Service Gateway zum OLT/ONT beinhaltet.

### 3.3 Anwendungsfall "PON Topology Discovery und dynamische Session Identifizierung" - Funktionsablauf

Aufbauend auf dem unter 3.1 beschriebenen Message Flow/Nachrichtenfluss setzt der folgende Anwendungsfalls an. Ein wesentlicher Unterschied zu 3.1 besteht darin, dass das Service Gateway die Service- und Portinformationen nicht mehr als statische Referenz konfiguriert bekommt, sondern dass das Service Gateway die über ANCP übermittelten Portinformationen mit den beim Sessionaufbau übermittelten Werten korreliert.

Damit entfällt das Provisionieren des Kundenreferenzstrings im Service Gateway um die Portdaten vergleichen zu können und eine Schedulereinstellung zuordnen zu können. Diese wird nun ersetzt durch das dynamische Lernen beim Aufbau einer Session. Das bedeutet, dass das Service Gateway bei Aktivieren eines PON Ports zuerst die Topologieinformation über ANCP erhält und speichert. Dieser String enthält die Topologieinformation wie OLT/ONT-ID, Slot, Port usw. Beim Aufbau einer Session erhält das Service Gateway über DHCP Option 82 oder PPPoE Intermediate Agent erneut einen String der den gleichen Aufbau hat. Dadurch ist ein Stringvergleich bei Sessionaufbau möglich und danach wird der Scheduler entsprechend eingestellt.

### 4. Neue Protokollelemente / ANCP TLV

Zugehörig zu den in Fig. 2 und 3 gezeigten Szenarien wird in diesem Abschnitt die zu den Port Status Nachrichten zugehörigen Informationsfelder definiert, die zur Übertragung der Verbindungsparameter in der GPON Umgebung notwendig sind. Hierbei handelt es sich nur um Beispiele, eine abweichende, alternative Zuordnung ist natürlich möglich.

In der ANCP Working Group wird die Protokollspezifikation erarbeitet. Die aktuelle Version 10 listet die zugehörigen TLV Bereiche auf. Der Bereich von 0x81 bis 0x91 ist bereits für DSL Parameter belegt. Die Bereiche 0x92 bis 0x-sind noch nicht belegt. Hier setzt die Erfindung an und definiert diese Bereiche und verwendet die Werte und Typen um das FTTH Szenario (Fig. 1) zu realisieren. Ferner werden die TLV Werte, die keine Verwendung in GPON finden auf "off" gesetzt-Type (DSL Line Attributes = 0x04):
TLV0x81-0x91 für DSL (bleibt wie vorher) TLV0xβ1-0x91 alle auf "FF" gesetzt, weil bei GPON Systemen keine aktuelle Synchronisationsrate analog zu DSL existiert.

**Neue TLV Bestandteil der Erfindung**

| Neue TLV | Bedeutung | Verwendung |
|---|---|---|
| TLV0x92 | layer 2 Bandbreite GPON actual net data rate (downstream) | (Unicast) |
| TLV0x93 | layer 2 Bandbreite GPON actual net data rate (upstream) | (Unicast) |
| TLV0x94 | layer 2 Bandbreite GPON attainable data rate (upstream) | (LAN Port) |
| TLV0x95 | layer 2 Bandbreite GPON downstream - Service Port 1 | (ETH Typ1) |
| TLV0x96 | layer 2 Bandbreite GPON upstream - Service Port 1 | (T-Cont Typ1) |
| TLV0x97 | layer 2 Bandbreite GPON downstream - Service Port 2 | (ETH Typ 2) |
| TLV0x98 | layer 2 Bandbreite GPON upstream - Service Port 2 | (T-Cont Typ2) |
| TLV0x99 | layer 2 Bandbreite GPON downstream - Service Port 3 | (ETH Typ 3) |
| TLV0x9A | layer 2 Bandbreite GPON upstream - Service Port 3 | (T-Cont Typ 3) |
| TLV0x9B | layer 2 Bandbreite GPON | (ETH Typ 4) |
| | downstream - Service Port 4 | |
| TLV0x9C | layer 2 Bandbreite GPON upstream - Service Port 4 | (T-Cont Typ 4) |
| TLV0x9D | layer 2 Bandbreite GPON downstream - Service Port 5 | (ETH Typ 5) |
| TLV0x9E | layer 2 Bandbreite GPON upstream - Service Port 5 | (T-Cont Typ 5) |

### Abkürzungen:

- AGS: Aggregationsswitch
- AN: Access Node
- ANCP: Access Node Control Protocol
- BBF: Broad Band Forum
- BRAS: Broadband Remote Access Server
- CPE: Customer Premise Equipment
- FTTH: Fibre To The Home
- GbE: Gigabit Ethernet
- GPON: Gigabit Passive Optical Network
- HG: Home Gateway
- ITU-T: International Telecommunication Union
- IETF: Internet Engineering Task Force
- OLT: Optical Line Termination
- OMCI: Operating Maintenance Control Interface
- ONT: Operation and Maintenance
- PON: Passive Optical Network
- SGW: Service Gateway
- SLA: Service Level Agreement
- SNMP: Simple Network Management Protocol
- TC: Transmission Convergence
- TLV: Type Length Value
- ZN: Zugangsnetz

## Patentansprüche

1. Verfahren zur automatischen Erlangung eines Port Status und/oder zur Konfigurationsteuerung durch ein Service Gateway in einem optischen Zugangsnetzwerk einer Abschlusseinrichtung ,ONT, umfassend eine optische Abschlusseinrichtung, ONT, beim Endkunden, die mit einer optische Line Terminierung, OLT, verbunden ist, die wiederum mit dem Service Gateway verbunden ist, umfassend die Schritte:
- Übermitteln einer ONT-ID und Zugangsdaten (C-Vlan ID, S-VLAN ID, LINE ID) vom ONT ans OLT als ONT-Informationen;
- Weiterleiten der ONT-Informationen vom OLT zum Service Gateway, wobei beim Aufbau einer Session über DHCP oder PPPoE vom ONT, eine oder mehrere der folgenden Informationen an den Service Gateway als entsprechende Session Daten mit übertragen wird: ONT-ID , OLT-ID, Slot, Port
- Zuordnung der ONT-ID zu einer über das DHCP oder PPPoE Protokoll erlangten IP-Adresse beim Gateway
- Vergleichen anhand einer Kundendatenbank durch den Service Gateway die erlangten ONT-Informationen und die Session Daten und Erzeugen einer Antwort an den OLT zur Steuerung der Einstellung zwischen ONT und OLT um kundenspezifische Session-/Netzwerkeinstellungen vorzunehmen, insbesondere was die Servicebandbreite (TC) betrifft, und Überwachen und Steuern des Datenflusses zum ONT durch den Service Gateway.

2. Das Verfahren nach dem vorhergehenden Anspruch, **dadurch gekennzeichnet, dass** zwischen OLT und Service Gateway über ANCP kommuniziert wird, um den Status der Verbindung zwischen OLT und ONT mitzuteilen, wobei vorzugsweise die ONT-ID zur Identifikation verwendet wird, um eine oder mehrere der folgenden Informationen zu übermitteln:
Port Typ, Senden von Bandbreiteninformatiönen, Port Up, Port Down.

3. Das Verfahren nach dem vorhergehenden Anspruch, wobei im ANCP TLV Bereiche verwendet werden, die noch nicht belegt sind, um den Status mitzuteilen.

4. Das Verfahren nach einem oder mehreren der vorhergehenden Ansprüche, wobei ein eindeutiges Portadressierungsschemas zur Teilnehmeridentifizierung verwendet wird.

5. Das Verfahren nach einem oder mehreren der vorhergehenden Ansprüche, wobei ein Port Typ (ONT) definiert wird.

6. Das Verfahren nach einem oder mehreren der vorhergehenden Ansprüche, wobei eine Erkennung erfolgt, ob die Anschlussleitung durch ein PON CPE abgeschlossen ist

7. Das Verfahren nach einem oder mehreren der vorhergehenden Ansprüche, wobei ein Senden einer "PON Port up"/ "Port down" Nachricht an das Service Gateway erfolgt.

8. System zur automatischen Erlangung eines Port Status und/oder zur Konfigurationsteuerung durch ein Service Gateway in einem optischen Zugangsnetzwerk einer optischen Abschlusseinrichtung, ONT, beim Endkunden,
- umfassend die ONT, die mit einer optische Line Terminierung, OLT, verbunden ist,
- umfassend einem Service Gateway, der mit dem OLT verbunden ist,
wobei die ONT so konfiguriert ist, das sie eine ONT-ID und Zugangsdaten (C-Vlan ID, S-VLAN ID, LINE ID) vom ans OLT als ONT-Informationen überträgt;
wobei die OLT so konfiguriert ist, dass ein Weiterleiten der ONT-Informationen vom OLT zum Service Gateway erfolgt, wobei beim Aufbau einer Session über DHCP oder PPPoE vom ONT, eine oder mehrere der folgenden Informationen an den Service Gateway als entsprechende Session Daten mit übertragen wird: ONT-ID , OLT-ID, Slot, Port wobei der Service-Gateway so konfiguriert ist, dass eine Zuordnung der ONT-ID zu einer über das DHCP oder PPPoE Protokoll erlangten IP-Adresse erfolgt und dass anhand einer Kundendatenbank ein Vergleichen der erlangten ONT-Informationen und der Session Daten erfolgt und ein Erzeugen einer Antwort an den OLT zur Steuerung der Einstellung zwischen ONT und OLT, um kundenspezifische Session-/Netzwerkeinstellungen vorzunehmen, insbesondere was die Servicebandbreite (TC) betrifft. und ein Überwachen und Steuern des Datenflusses zum ONT durch den Service Gateway erfolgt..

9. Das System nach dem vorhergehenden Anspruch, **dadurch gekennzeichnet, dass** Mittel vorhanden sind, um zwischen OLT und Service Gateway über ANCP kommuniziert wird, um den Status der Verbindung zwischen OLT und ONT mitzuteilen, wobei vorzugsweise die ONT-ID zur Identifikation verwendet wird, um eine oder mehrere der folgenden Informationen zu übermitteln:
Port Typ, Senden von Bandbreiteninformationen, Port Up, Port Down.

10. Das System nach dem vorhergehenden Anspruch, wobei im ANCP TLV Bereiche Verwendung finden, die noch nicht belegt sind, um den Status mitzuteilen.

## Claims

1. A method for automatically obtaining port status and/or configuration control by a service gateway in an optical access network of a termination device, ONT, comprising an optical termination device, ONT, at the end user, connected to an optical line termination, OLT, which in turn is connected to the service gateway, comprising the steps:
- Transmission of an ONT ID and access data (C-Vlan ID, S-VLAN ID, LINE ID) from the ONT to the OLT as ONT information;
- Forwarding of the ONT information from the OLT to the service gateway, whereby when a session is set up via DHCP or PPPoE from the ONT, one or more of the following information is transferred to the service gateway as corresponding session data: ONT ID, OLT ID, slot, port;
- Assigning of the ONT ID to an IP address obtained via DHCP or PPPoE protocol at the gateway;
- Comparing the acquired ONT information and session data using a customer database through the service gateway and generating a response to the OLT to control the settings between ONT and OLT in order to make custom session/network settings, preferably with regard to the service bandwidth (TC), and monitoring and controlling the flow of data to the ONT through the service gateway.

2. A method according to the preceding claim, **characterized in that** communication is performed between OLT and Service Gateway via ANCP to communicate the status of the connection between OLT and ONT, preferably using the ONT ID for identification to transmit one or more of the following information: Port type, transmission of bandwidth information, port up, port down.

3. The method according to the preceding claim, using areas in the ANCP TLV that are not yet occupied to communicate the status.

4. The method according to one or more of the preceding claims using a unique port addressing scheme for subscriber identification.

5. The method according to one or more of the preceding claims, defining a port type (ONT).

6. The method according to one or more of the preceding claims, wherein a detection is used of whether the connecting cable is terminated by a PON CPE

7. The method according to one or more of the preceding claims, wherein a "PON Port up" / "Port down" message is sent to the Service Gateway.

8. System for automatic port status acquisition and/or configuration control by a service gateway in an optical access network of an optical termination device, ONT, at the end user,
- comprising the ONT connected to an optical line termination OLT,
- comprising a service gateway connected to the OLT,
wherein the ONT is configured to transmit an ONT ID and access data (C-Vlan ID, S-VLAN ID, LINE ID) from the ONT to the OLT as ONT information;
wherein OLT is configured to forward the ONT information from the OLT to the service gateway, wherein when a session is set up via DHCP or PPPoE from the ONT, one or more of the following information is transferred to the service gateway as corresponding session data with: ONT ID, OLT ID, slot, port
wherein the service gateway is configured so that an assignment of the ONT ID to an IP address obtained via the DHCP or PPPoE protocol takes place and that a comparison of the acquired ONT information and the session data is made on the basis of a customer database and a response is generated to the OLT for controlling the setting between ONT and OLT in order to carry out customer-specific session/network settings, in particular with regard to the service bandwidth (TC), and monitoring and control of the data flow to the ONT is carried out by the service gateway.

9. The system according to the preceding claim, **characterized in that** means are provided to communicate between OLT and Service Gateway via ANCP to communicate the status of the connection between OLT and ONT, preferably using the ONT ID for identification to transmit one or more of the following information: Port type, transmission of bandwidth information, port up, port down.

10. The system according to the preceding claim, wherein areas are used in the ANCP TLV that are not yet occupied to communicate the status.

## Revendications

1. Un procédé pour obtenir automatiquement un état de port et/ou la commande de configuration par une passerelle de service au sein d'un réseau d'accès optique d'un dispositif de terminaison, ONT, comprenant un dispositif de terminaison optique, ONT, du côté de l'utilisateur final, connecté à une terminaison de ligne optique, OLT, qui à son tour est connectée à la passerelle de service, comprenant les étapes consistant à:
- transmettre un ONT-ID et des données d'accès (ID C-VLAN, ID S-VLAN, ID LINE) à partir de la terminaison ONT vers le OLT, en tant qu'information ONT ;
- transmettre des informations ONT de l'OLT à la passerelle de service, par laquelle lorsqu'une session est établie via DHCP ou PPPoE depuis le ONT, un ou plusieurs éléments d'information qui suivent est transféré à la passerelle de service en tant que données de session correspondantes : ID ONT, ID OLT, slot, port ;
- affecter le ID ONT à une adresse IP obtenue via un protocole DHCP ou PPPoE au niveau de la passerelle ;
- Comparer l'information ONT acquise et les données de session en utilisant une base de données d'utilisateur au travers la passerelle de service et générer une réponse pour l'OLT afin de commander le paramétrage entre ONT et OLT afin d'effectuer le paramétrage de session/réseau spécifique, de préférence relativement à la bande passante de service (TC), et surveiller et commander le flux de données vers le ONT via la passerelle de service.

2. Le procédé selon la revendication précédente, **caractérisé en ce que** la communication est réalisée entre OLT et la passerelle de service via ANCP pour communiquer l'état de la connexion entre OLT et ONT, de préférence en utilisant le ID ONT pour l'identification et la transmission de l'une ou plusieurs des informations suivantes : type de port, transmission d'information de bande-passante, port actif, port éteint.

3. Le procédé selon la revendication précédente, utilisé des zones dans le ANCP TLV qui ne sont pas encore occupées, pour communiquer l'état.

4. Le procédé selon l'une ou plusieurs des revendications précédentes, utilisant un unique schéma d'adressage de port pour l'identification de l'abonné.

5. Le procédé selon l'une ou plusieurs des revendications précédentes, dans lequel est défini un type de port (ONT).

6. Le procédé selon l'une ou plusieurs des revendications précédentes, dans lequel une détection est effectuée pour savoir si la ligne de raccordement est fermée par un CPE PON.

7. Le procédé selon l'une ou plusieurs des revendications précédentes, dans lequel on envoit d'un message « port PON up » / « port vers le bas » à la passerelle de service.

8. Un système permettant d'obtenir automatiquement un état de port et/ou la commande de configuration par une passerelle de service au sein d'un réseau d'accès optique d'un dispositif de terminaison optique, ONT, au niveau de l'utilisateur final,
- comprenant un ONT connecté à une terminaison de ligne optique OLT,
- comprenant une passerelle de service connectée à la OLT,
dans lequel le ONT est configuré pour transmettre un ID ONT et des données d'accès (ID C-VLAN, ID S-VLAN, ID LINE) du ONT vers le OLT en tant qu'information ONT ;
dans lequel le OLT est configuré pour faire suivre l'information ONT depuis le OLT vers la passerelle de service, dans lequel une session est établie via DHCP ou PPPoE depuis le ONT, un ou plusieurs éléments d'information suivant étant transférés à la passerelle de service en tant que données de session correspondante avec : ID ONT, ID OLT, slot, port
dans lequel la passerelle de service est configuré de telle manière qu'intervient une affectation du ID ONT à une adresse IP obtenue via un protocole DHCP ou PPPeE et qu'est effectuée une comparaison entre l'information ONT acquise et les données de session sur la base d'une base de données de client et qu'une réponse est générée vers le OLT pour commander la configuration entre ONT et OLT afin de réaliser une configuration session/réseau spécifique au client, en particulier au regard de la largeur de bande de service (TC), et la surveillance et la commande du flux de données vers le ONT est réalisée par la passerelle de service.

9. Le système selon la revendication précédente, **caractérisé en ce que** des moyens sont prévus pour communiquer entre l'OLT et une passerelle de service via ANCP pour communiquer l'état de la connexion entre OLT et ONT, de préférence en utilisant le ID ONT pour l'identification pour transmettre un ou plusieurs éléments d'information qui suivent : type de port, l'envoi d'informations de bande passante, le port activé, et le port désactivé.

10. Le système selon la revendication précédente, dans lequel des zones sont utilisées dans le TLV ANCP qui ne sont pas encore occuper, afin de communiquer l'état.
